# EUROPÄISCHE PATENTSCHRIFT

(11) **EP 0 770 552 B1**
(45) Veröffentlichungstag und Bekanntmachung des Hinweises auf die Patenterteilung: **19.01.2000**
(21) Anmeldenummer: 95116856.6
(22) Anmeldetag: 26.10.1995
(51) Int. Cl.: B65D 1/38, B65D 25/30

(54) **Kasten, insbesondere Flaschenkasten und Verfahren zum Herstellen eines solchen Kastens**
Bottle crates and method for manufacturing such crates
Casier à bouteilles et procédé de fabrication d'une tel casier

(43) Veröffentlichungstag der Anmeldung: 02.05.1997
(73) Patentinhaber: Götz, Wilhelm, D-88410 Bad Wurzach (DE)
(72) Erfinder: Götz, Wilhelm, D-88410 Bad Wurzach (DE)
(74) Vertreter: Hutzelmann, Gerhard

(56) Entgegenhaltungen:
- EP-A- 0 484 763
- EP-A- 0 486 107
- EP-A- 0 603 531
- EP-A- 0 687 630
- DE-A- 3 940 186
- DE-A- 4 022 884
- DE-U- 9 418 484
- FR-A- 2 674 219
- US-A- 5 145 082

## Beschreibung

Die Erfindung bezieht sich auf einen Kasten, insbesondere Flaschenkasten, der aus Kunststoff im Spritzverfahren hergestellt ist, mit einem Kastenboden und wenigsten einem Handgriff zum Tragen des Kastens, wobei der Handgriff wenigstens oben und unten mit einem wulstförmigen in Längsrichtung des Handgriffs verlaufenden Abschnitt versehen ist, von denen wenigstens einer wenigstens einer wenigstens auf einem Teil seiner Längserstreckung durch Gaseinblasung hohl ausgebildet ist.

Derartige Kästen sind im beladenen Zustand sehr schwer, wobei der Handgriff in die Hand einschneidet und sich damit ein sehr unbequemes Tragen ergibt.

Es sind zahlreiche Versuche bekannt, den Handgriff so auszugestalten, daß er handfreundlicher ist.

Beispielweise ist aus DE-U-94 18 484 ein Kasten bekannt, der aus Kunststoff im Spritzverfahren hergestellt ist und der einen Kastenboden und mehrere Handgriffe zum Tragen des Kastens aufweist. Die Handgriffe sind oben und unten mit einem wulstförmigen Abschnitt versehen, die durch Gaseinblasung hohl ausgebildet sind.

Der Erfindung liegt, hiervon ausgehend die Aufgabe zugrunde, einen Kasten der genannten Art so auszugestalten, daß er sich auch im vollen und damit schweren Zustand verhältnismäßig leicht tragen läßt.

Diese Aufgabe wird erfindungsgemäß dadurch gelöst, daß der an der unteren Kante des Handgriffs angeordnete wulstförmige Abschnitt sowohl an seiner Unterseite als auch an seiner freien Oberseite wellenförmig ausgebildet ist, wobei die Wellen quer zur Längsrichtung des Handgriffs verlaufen und entsprechend den Fingern der menschlichen Hand ausgebildet sind.

Hierdurch wird eine optimale Grifffläche am Handgriff gebildet, welche ein bequemes Tragen auch des vollen Kastens erlaubt. Durch die Gaseinblasung kann im hohl ausgebildeten Bereich Kunststoffmaterial eingespart werden. Darüber hinaus wird aber durch den Gasdruck ein beim Abkühlen des Kunststoffes normalerweise eintretender Schwund ausgeglichen und der fertig abgekühlte Kasten weist keinerlei schwundbedingte Einfallstellen auf. Darüber hinaus wird hiermit eine hohe Stabilität des Handgriffes gewährleistet.

Erfindungsgemäß kann auch vorgesehen werden, daß der an der oberen Kante des Handgriffs vorgesehene wulstförmige Abschnitt an seiner freien Unterseite wellenförmig ausgebildet ist.

Dadurch erhalten die Fingerspitzen einen sehr guten seitlichen Halt, was das Tragen des Kastens noch wesentlich erleichtert.

Eine vorteilhafte Ausgestaltung der Erfindung ist dadurch gekennzeichnet, daß wenigstens der an der Unterseite des Handgriffs angeordnete wulstförmige Abschnitt im Querschnitt wenigstens annähernd tropfenförmig ausgebildet ist.

Dadurch wird neben der Handfreundlichkeit eine sehr hohe Festigkeit erzielt.

Eine weitere vorteilhafte Ausgestaltung der Erfindung liegt darin, daß zwischen den beiden wulstförmigen Abschnitten wenigstens ein weiterer rippenförmiger Abschnitt vorgesehen ist.

Damit wird zum einen die Stabilität des Handgriffs noch weiter erhöht und zum anderen der Tragekomfort verbessert, da sich die Fingerspitzen an dem weiteren rippenförmigen Abschnitt abstützen können.

Als sehr vorteilhaft hat es sich ergeben, wenn erfindungsgemäß die wulst- und/oder rippenförmigen Abschnitte untereinander verbunden sind.

Dabei kann der von beiden Seiten des Handgriffs eingespritzte Kunststoff sich leicht verbinden.

Als sehr vorteilhaft hat es sich auch ergeben, wenn erfindungsgemäß wenigstens der obere und der untere wulstförmige Abschnitt durch voneinander getrennte Gaseinblasung mit einem Hohlraum versehen sind, die keine Verbindung miteinander aufweisen.

Damit werden die Vorteile einer hohlen Ausgestaltung der wulstförmigen Abschnitte erzielt ohne die Nachteile bei einer Verbindung der Hohlräume mit deren dann eintretenden unkontrollierten Ausdehnung in Kauf nehmen zu müssen.

Es hat sich auch als sehr vorteilhaft erwiesen, wenn erfindungsgemäß im Handgriffbereich Fließbremsen für die Kunststoffströme vorgesehen sind, die einerseits die Fließgeschwindigkeit des Kunststoffes reduzieren und andererseits ein Durchbrechen des Gases verhindern.

Damit wird erreicht, daß die Kunststoffströme in den einzelnen wulst- und/oder rippenförmigen Abschnitten unterschiedlich schnell vorankommen, so daß bei beidseitigem Einspritzen des Kunststoffs die Zusammentreff-Stellen der Kunststoffströme an unterschiedlichen Stellen vorliegen. Da die Zusammentreff-Stellen im allgemeinen eine Schwachstelle darstellen, wird hierdurch deren negativer Einfluß auf die Festigkeit des Handgriffs erheblich reduziert. Zum anderen wird an diesen Fließbremsen verhindert, daß sich ungewollte Hohlraumverbindungen einstellen, da bei entsprechender Ausgestaltung der Fließbremsen zwar der Kunststoff durch diese Fließbremsen hindurch gelangt; infolge der sich bildenden Engstelle aber ein Gasdurchtritt nicht erfolgen kann.

Eine weitere vorteilhafte Ausgestaltung der Erfindung liegt darin, daß der untere wulstförmige Abschnitt des Handgriffs bogenförmig verläuft und der Handgriff an seiner Unterseite damit eine konvexe Form aufweist.

Mit diesem bogenförmigen Verlauf der unteren Handgriffkante wird die Handfreundlichkeit und damit der Tragekomfort noch weiter verbessert.

Eine weitere vorteilhafte Ausgestaltung der Erfindung liegt bei einem Kasten, insbesondere einem Flaschenkasten, der aus Kunststoff im Spritzverfahren hergestellt und mit einem Handgriff versehen ist, der aus wenigstens zwei übereinander angeordneten wulstförmigen Abschnitten besteht, darin, daß wenigstens die untere Außenseite des unteren wulstförmigen Abschnitts aus einem weicheren Kunststoffmaterial hergestellt ist.

Dadurch wird die Grifffreundlichkeit des Handgriff noch weiter erhöht.

Erfindungsgemäß kann dabei vorgesehen sein, daß das weichere Kunststoffmaterial ebenfalls im Spritzverfahren in die Form eingebracht und an der Innenseite mit dem eigentlichen Kunststoffmaterial zum Herstellen des übrigen Kastens abgedeckt ist.

Damit ist trotz des für die Handfreundlichkeit günstigen weichen Kunststoffmaterials eine ausreichende Festigkeit im Bereich des Handgriffs gegeben.

Als sehr vorteilhaft hat es sich dabei ergeben, wenn erfindungsgemäß das weichere Kunststoffmaterial als separates Bauteil hergestellt und vor dem Spritzen des übrigen Kastens in die Spritzform eingelegt ist.

Es ist erfindungsgemäß jedoch auch möglich, daß das weichere Material als separates Bauteil hergestellt und nachträglich am Handgriff angebracht ist.

Ebenfalls sehr vorteilhaft ist es, wenn erfindungsgemäß die untere Außenseite des Handgriffs und der übrige Kasten aus einem artverwandten Kunststoff hergestellt sind.

Damit ist es möglich den gesamten Kasten zu recyceln, ohne die einzelnen Bestandteile dabei trennen zu müssen.

Sehr günstig ist es auch, wenn gemäß einer weiteren Ausgestaltung der Erfindung sowohl die untere Außenseite des Handgriffs als auch der übrige Kasten aus Polyäthylen, allerdings mit unterschiedlicher Härte, hergestellt sind.

Da dabei ein nahezu einheitlicher Kunststoff für den gesamten Kasten vorliegt, ist ein Recyceln besonders einfach und unproblematisch durchzuführen.

Ein vorteilhaftes Verfahren zum Herstellen eines Kastens aus Kunststoff, insbesondere eines Flaschenkastens, der mit wenigstens einem Handgriff versehen ist und einen Kastenboden aufweist, wobei das Einspritzen des flüssigen Kunststoffes in eine Spritzform vom Kastenboden her erfolgt, wobei der Kunststoff vom Kastenboden her in den Bereich des Handgriffs gelangt und diesen von zwei gegenüberliegenden Enden des Handgriffs gleichzeitig anströmt, wobei die übereinander liegenden wulst- und/oder rippenförmigen Abschnitte mit unterschiedlicher Strömungsgeschwindigkeit angeströmt werden und in die Kanäle zur Bildung der wulst- und/oder rippenförmigen Abschnitte im noch flüssigen Zustand des Kunststoffs Gas eingepreßt wird, wobei der Gasdruck bis zum wenigstens teilweisen Abkühlen des Kunststoffs aufrechterhalten wird, ist dadurch gekennzeichnet, daß im Bereich des Handgriffs zwei unterschiedliche Kunststoffe eingespritzt werden, wobei sich der nach dem Erhärten weichere Kunststoff an die untere Außenseite des Handgriffs anlegt und der andere Kunstsoff die übrige Spritzform ausfüllt.

Mit diesem Verfahren wird ein sowohl bzgl. der Handhabbarkeit sehr vorteilhafter als auch sehr fester Handgriff hergestellt. Durch die unterschiedlichen Strömungsgeschwindigkeiten sind die Zusammentreffstellen in den wulstförmigen Abschnitten zueinander versetzt, so daß eine hier eintretende Schwächung ausgeglichen wird. Durch den Gasdruck werden zum einen Hohlräume erzeugt und zum anderen der Schwund des Kunststoffmaterials beim Abkühlen ausgeglichen. Darüber hinaus ist es möglich auf äußerst rationelle Weise getrennte Hohlräume herzustellen. Dieses gleichzeitige Einpressen des Gases kann dabei über eine einzige zentral angeordnete Düse oder besser über zwei getrennte Düsen erfolgen, die dann direkt in den zu bildenden Hohlraum münden.
Außerdem wird eine einwandfreie Verbindung des Kunststoffes der wulst- und/oder rippenförmigen Abschnitte erreicht, ein Durchblasen des Gases aber wirksam verhindert.

Mit diesem Verfahren wird auf einfache Weise ein Kasten mit einer griffsympathischen Griffoberfläche hergestellt.

In der Zeichnung ist die Erfindung anhand mehrerer Ausführungsbeispiele veranschaulicht. Dabei zeigen:
- Fig.1: einen Vertikalschnitt durch einen Flaschenkasten mit einem Boden, vier Seitenwänden und einem Mittelhandgriff, der an seiner Unterseite wellen-förmig gestaltet ist und drei übereinanderliegende wulst- bzw. rippenförmige Abschnitte aufweist,
- Fig.2: einen Vertikalschnitt durch den in Fig. 1 dargestellten Mittelhandgriff,
- Fig.3: einen Vertikalschnitt durch einen weiteren Flaschenkasten, bei dem in allen vier Seitenwänden Handgriffe mit darunter liegenden Durchgriffsöffnungen vorgesehen sind, wobei im Handgriff hintereinanderliegende wulstförmige Abschnitte angeordnet sind,
- Fig.4: einen Vertikalschnitt durch einen Flaschenkasten mit Handgriffen in den Seitenwänden wobei die wulstförmigen Abschnitte parallel zueinander angeordnet sind,
- Fig.5: eine schaubildliche Darstellung eines aufgeschnittenen Handgriffs, bei dem zwei parallel übereinander angeordnete wulstförmige Abschnitte vorgesehen sind, die weitgehend wellenförmig ausgebildet sind,
- Fig.6: eine Schnittdarstellung eines Handgriffs mit an seiter Unterseite angebrachtem weicheren Material und
- Fig.7: ein weiteres Ausführungsbeispiel eines Flaschenkastens mit in den Seitenwänden integrierten Handgriffen, mit einem bogenförmig verlaufenden unteren Abschnitt, wobei zwei horizontal verlaufende rippenförmige Abschnitte vorgesehen sind.

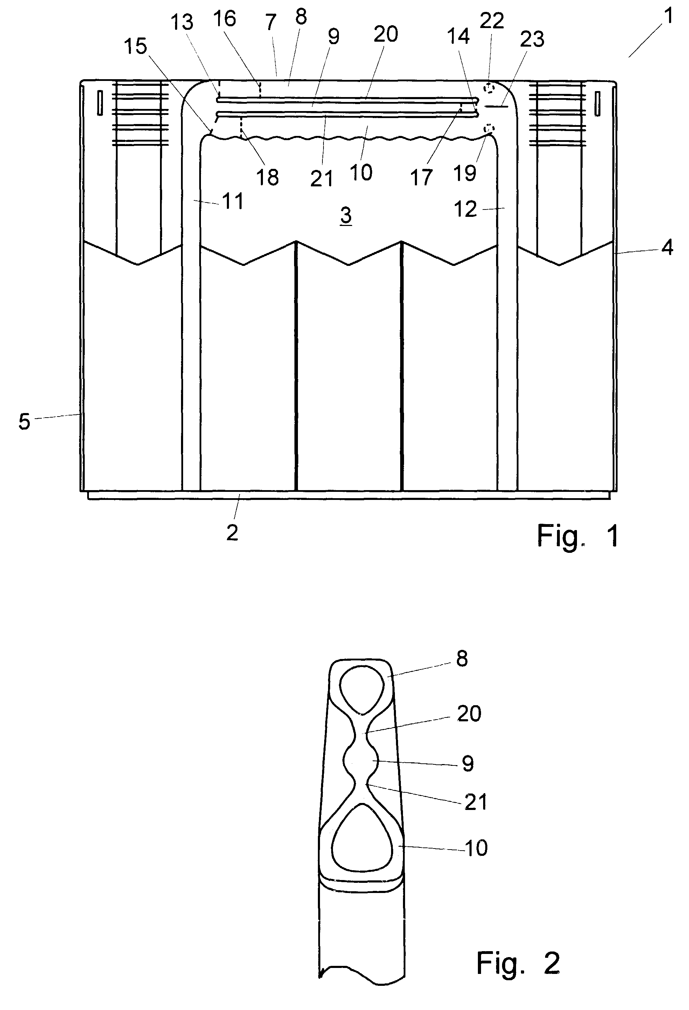

Mit in Fig.1 1 ist ein Flaschenkasten bezeichnet, der einen Boden 2 und vier von diesem aufragende Seitenwände 3, 4, 5 und 6 aufweist. In der Mitte des Bodens 2 ist an diesem ein Handgriff 7 angeordnet, der bis in die Höhe des oberen Randes der Seitenwände reicht. Dieser Handgriff 7 ist an seiner Unterseite wellenförmig ausgebildet, wobei die Wellenform der Fingeranordnung an der menschlichen Hand angepaßt ist. Der Handgriff 7 weist drei übereinander liegende Abschnitte 8, 9 und 10 auf, die wulstförmig ausgebildet sind. Dabei ist der obere und der untere Abschnitt 8 und 10 jeweils hohl ausgebildet und mit einem verhältnismäßig großen Außendurchmesser hergestellt. Beide Abschnitte 8 und 10 weisen sowohl in ihrer äußeren Form als auch in der Querschnittsform des Hohlraumes eine Tropfenform auf. Der innere wulstförmige Abschnitt 9 hat dagegen einen etwas kleineren Durchmesser und ist massiv ausgebildet. Der Kunststoff wird zum Bilden dieses Handgriffs 7 vom Boden 2 her gleichzeitig durch die senkrechten Holme 11 und 12 in den eigentlichen Handgriff geleitet, wobei die beiden Kunststoffströme normalerweise in der Mitte des Handgriffs aufeinandertreffen und sich dort vereinigen. Aufgrund der bereits eingetretenen teilweisen Abkühlung des Kunststoffes kann die Vereinigung nicht mehr optimal sein, wodurch hier eine Schwachstelle des Handgriffs vorliegen würde. In den drei übereinanderliegenden Abschnitten 8, 9 und 10 sind jeweils auf einer Seite Fließbremsen 13, 14 und 15 in der Spritzform vorgesehen, welche die Fließgeschwindigkeit des Kunststoffs herabsetzen. Dadurch wird die jeweilige Zusammentreffstelle 16, 17 und 18 der beiden Kunststoffströme aus der Mitte des Handgriffs in den Randbereich verschoben. Für die drei Abschnitte 8, 9 und 10 liegen diese Zusammentreffstellen an jeweils unterschiedlichen Positionen, so daß der Handgriff trotz eventuell vorliegender Schwachstellen eine optimale Festigkeit erhält. Am einen Ende des Handgriffs 7 sind darüber hinaus zwei Anschlüsse 19 und 22 für Druckgas vorgesehen, welches jeweils in den oberen bzw. den unteren Abschnitt 8 und 9 gelangt, wodurch diese beiden Abschnitte hohl ausgebildet werden. Eine weitere Fließbremse 23 sorgt dafür, daß die beiden Druckgasströme keine gegenseitige Verbindung eingehen und so gezielt nur in den jeweils zugeordneten Abschnitt gelangen. Die Druckbeaufschlagung mit diesem Gas erfolgt dabei solange, bis der Kunststoff abgekühlt ist und kein Schrumpf mehr erfolgen kann. Auch für den Fall, daß die Spritzform bereits weitgehend mit Kunststoff ausgefüllt ist, wird dieses Druckgas eingeleitet und der Gasdruck während des Abkühlens des Kunststoffs aufrechterhalten, wodurch ein Schrumpfen des Kunststoffes beim Abkühlen unterbunden wird. Hohlräume in den wulstförmigen Abschnitten können dabei durchaus entstehen, die dann aber nicht über die volle Länge des jeweiligen Abschnittes reichen.

Wie besonders aus Fig.2 ersichtlich ist, sind die drei übereinander liegenden wulstförmigen Abschnitte 8, 9 und 10 mittels zweier Stege 20 und 21 miteinander verbunden. Der untere wulstförmige Abschnitt 10 ist im wesentlichen tropfenförmig ausgebildet, wobei seine untere Fläche leicht abgeplattet und in Längsrichtung wellenförmig ausgebildet ist. Der obere Abschnitt 8 hat eine ähnliche tropfenförmige Gestalt und ist an seiner oberen Fläche leicht abgeplattet ausgebildet. Beide wulstförmigen Abschnitte 8 und 10 sind hohl ausgebildet, wobei das hierzu verwendete Druckgas durch die Öffnung 19 eingeblasen wurde und von dort gleichzeitig in die beiden Abschnitte 8, 10 einströmt. Die innere Gestalt der beiden Hohlräume ist dabei ebenfalls tropfenförmig. Infolge des geringeren freien Querschnittes des Abschnittes 9 und der zusätzlichen Fließbremse 14 gelangt kein Gas in den mittleren Abschnitt; gleichwohl wirkt der Gasdruck über den Kunststoff auch auf diesen Abschnitt und verhindert auch dort - wie in den beiden anderen Abschnitten und den Verbindungswegen - ein Einfallen derAußenflächen während des Abkühlens des Kunststoffes und des damit einhergehenden Schrumpfens.

Durch die zweite Einström-Öffnung 22, die unmittelbar beim oberen Abschnitt 8 vorgesehen ist, wird ein optimales gleichzeitiges Einströmen des Druckgases in die beiden Abschnitte 8 und 10 erreicht. Durch eine zwischen diesen beiden Einström-Öffnungen 19 und 22 vorgesehene Dünnstelle 23 wird verhindert, daß sich die beiden Gasströme vereinigen. Auch an den beiden von den Einström-Öffnungen 19 und 22 abgewandten Enden der drei Abschnitte 8, 9 und 10 ist infolge der Fließbremsen 13 und 15 und der damit verbundenen Engstellen eine Verbindung der Gasströme nicht möglich.

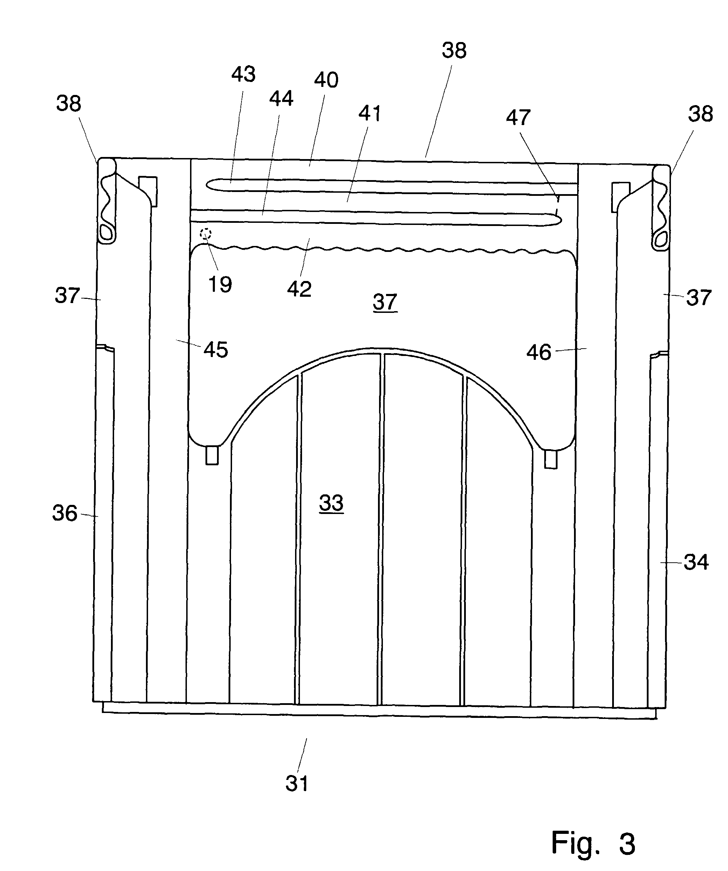

Beim Ausführungsbeispiel nach Fig.3 sind in den Seitenwänden 33, 34, 35 und 36 des Flaschenkastens 31 Durchgriffsöffnungen 37 vorgesehen, die an ihrer oberen Seite mit einem Handgriff 38 abgeschlossen sind. Jeder dieser Handgriffe 38 enthält drei übereinander liegende wulst- bzw. rippenförmige Abschnitte 40, 41 und 42, von denen nur der untere Abschnitt 42 hohl ausgebildet ist. Die drei wulst- bzw. rippenförmigen Abschnitte 40, 41 und 42 sind über Stege 43 und 44, die einen verhältnismäßig geringen Querschnitt aufweisen, miteinander verbunden. Der gesamte Handgriff wird über die beiden senkrechten Holme 45 und 46 mit flüssigem Kunststoff versorgt, der gleichzeitig in die drei Abschnitte 40, 41, 42 und die beiden Stege 43, 44 gelangt. Gleichzeitig wird durch die Einström-Öffnung 19 Druckgas in den unteren Abschnitt 42 eingepreßt, das dort einen Hohlraum ausbildet. Am Ende des Abschnittes 42 wirkt das Druckgas zwar solange sein Druck aufrechterhalten wird auf den Kunststoff in den weiteren Abschnitten 40 und 41 bzw. den Stegen 43 und 44, kann jedoch dort aufgrund der geringen Querschnitte bzw. der vorgesehenen Fließbremse 47 keinen Hohlraum ausbilden. Die Unterseite des Handgriffs 38 ist wieder wellenförmig ausgebildet.

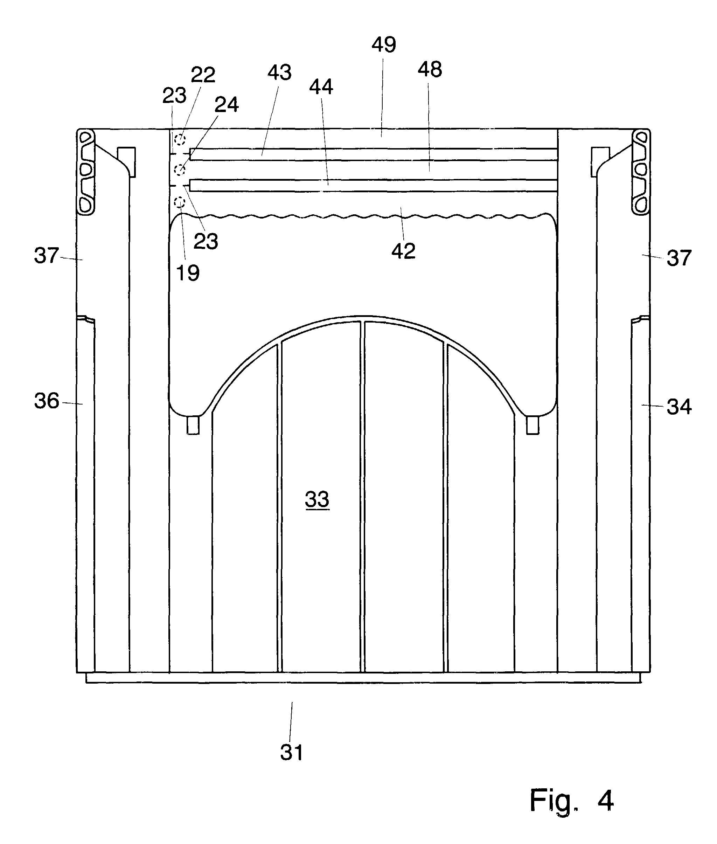

Beim in Fig.4 dargestellten Ausführungsbeispiel sind im sonst gegenüber Fig.3 gleichen Flaschenkasten 31 drei parallelle wulstförmige Abschnitte 42, 48 und 49 angeordnet, die durch Stege 43 und 44 miteinander verbunden sind. Im Bereich jedes der Abschnitte 42,48,49 ist eine Einblasöffnung 19, 22, 24 vorgesehen, über welche Druckgas in die einzelnen Abschnitte gelangt und diese hohl ausbildet. Zwischen diesen drei Einblasöffnungen sind zwei Fließbremsen 23 vorgesehen, welche ein Durchbrechen des Druckgases in den jeweils anderen Hohlraum verhindern.

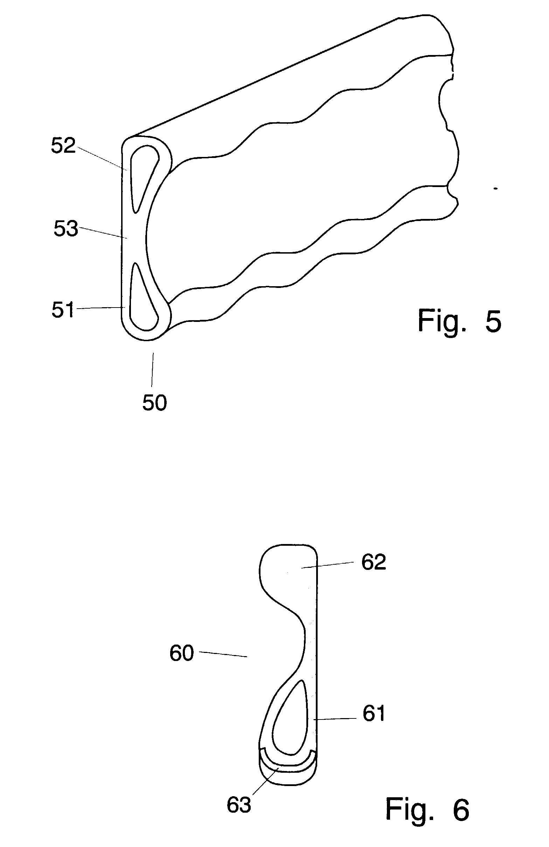

In Fig.5 ist ein Handgriff 50 dargestellt, der zwei übereinanderliegende wulstförmige Abschnitte 51 und 52 aufweist. Beide Abschnitte sind im Querschnitt tropfenförmig ausgebildet und durch einen Steg 53 miteinander verbunden. Im Inneren sind die beiden wulstförmigen Abschnitte 51, 52 ebenfalls tropfenförmig ausgebildet, wobei die beiden Hohlräume durch getrenntes Einblasen von Druckgas entstanden sind. Der untere der beiden Abschnitte ist sowohl an seiner Unterseite als auch an seiner freien Oberseite wellenförmig ausgebildet. Auch die freie Unterseite des oberen Abschnittes 52 ist wellenförmig gestaltet. Dadurch erfahren die Finger bzw. Fingerspitzen in den Wellentälern einen sehr guten seitlichen Halt.

Beim Ausführungsbeispiel nach Fig.6 ist lediglich der untere wulstförmige Abschnitt 61 des Handgriffs 60 hohl ausgebildet und hat sowohl außen als auch innen eine tropfenförmige Gestalt. Der obere Abschnitt 62 ist im Querschnitt ebenfalls tropfenförmig gestaltet; eine Hohlraumausbildung hat hier jedoch nicht stattgefunden. An der Unterseite des unteren Abschnitte 61 ist eine Lage 63 aus weicherem Kunststoffmaterial vorgesehen, welche die untere Abschlußfläche bildet. Diese Lage 63 wird durch eine getrennte, nicht dargestellte Einspritzdüse in diesen Bereich eingespritzt und zwar nach dem Spritzen des eigentlichen Kastens. Es ist jedoch auch möglich, diese Lage 63 getrennt herzustellen und entweder vor dem Spritzen des Kastens in die Spritzform einzulegen oder nachträglich am fertigen Kasten anzubringen.

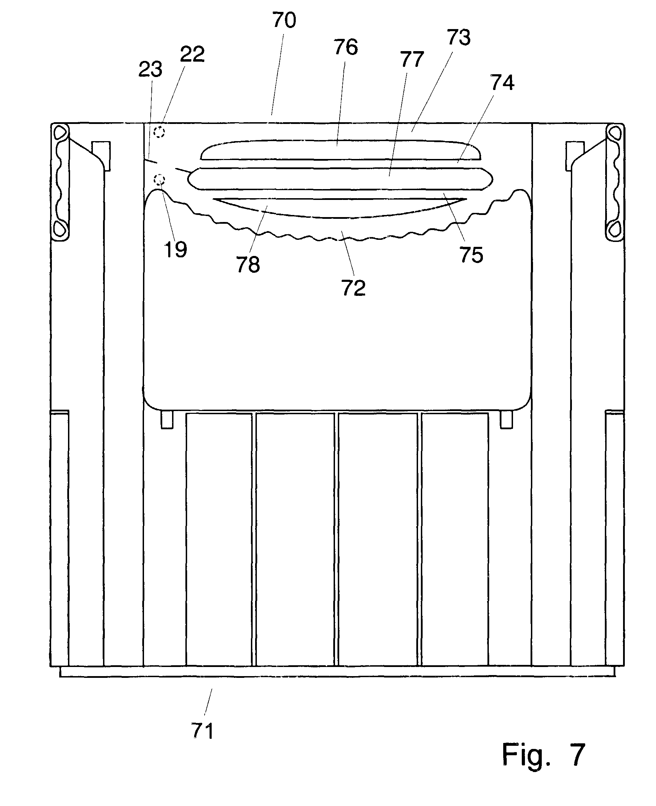

Beim in Fig.7 dargestellten Ausführungsbeispiel ist die untere Begrenzung des Handgriffs 70 des Kastens 71 gewölbt ausgebildet. Damit verläuft auch der untere wulstförmige Abschnitt 72 bogenförmig. Der obere wulstförmige Abschnitt 73 und zwei dazwischen liegende rippenförmige Abschnitte 74 und 75 verlaufen dagegen geradlinig. Auch hier sind wieder Stege 76, 77 und 78 zwischen den benachbarten Abschnitten vorgesehen. Durch die beiden Einström-Öffnungen 19 und 23, die durch eine Fließbremse 23 von einander abgeschirmt sind, gelangt wieder Druckgas in den unteren und den oberen wulstförmigen Abschnitt 72 und 73, wodurch diese unabhängig von einander hohl ausgebildet werden. In den beiden Schmalseitenwänden des Kastens 71 können auch anstelle der gewölbt ausgebildeten Handgriffe 70 gerade ausgebildete Handgriffe vorgesehen sein, wie sie beispielsweise in den Fig.3 und 4 dargestellt sind. Es können aber auch hier an der Unterseite bogenförmig ausgebildete Handgriffe eingesetzt werden.

## Patentansprüche

1. Kasten(1), insbesondere Flaschenkasten, der aus Kunststoff im Spritzverfahren hergestellt ist, mit einem Kastenboden(2) und wenigsten einem Handgriff(7,38,50,60,70) zum Tragen des Kastens(1), wobei der Handgriff(7,38,50,60,70) wenigstens oben und unten mit einem wulstförmigen, in Längsrichtung des Handgriffs verlaufenden Abschnitt(8,10;40,42;49;51,52;61,62;72,73) versehen ist, von denen wenigstens einer wenigstens auf einem Teil seiner Längserstreckung durch Gaseinblasung hohl ausgebildet ist, **dadurch gekennzeichnet,** daß der an der unteren Kante des Handgriffs(50) angeordnete wulstförmige Abschnitt(51) sowohl an seiner Unterseite als auch an seiner freien Oberseite wellenförmig ausgebildet ist, wobei die Wellen quer zur Längsrichtung des Handgriffs verlaufen und entsprechend den Fingern der menschlichen Hand ausgebildet sind.

2. Kasten nach Anspruch 1, dadurch gekennzeichnet, daß der an der oberen Kante des Handgriffs(50) vorgesehene wulstförmige Abschnitt(52) an seiner freien Unterseite wellenförmig ausgebildet ist.

3. Kasten nach Anspruch 1 oder 2, **dadurch gekennzeichnet,** daß wenigstens der an der Unterseite des Handgriffs(7,38,50,60,70) angeordnete wulstförmige Abschnitt(10,42,51,61,71) im Querschnitt wenigstens annähernd tropfenförmig ausgebildet ist.

4. Kasten nach Anspruch 1, 2 oder 3, **dadurch gekennzeichnet**, daß zwischen den beiden wulstförmigen Abschnitten(8,10;40,42;42,49;71,72) wenigstens ein weiterer rippenförmiger Abschnitt(9,41,48,74,75) vorgesehen ist.

5. Kasten nach einem der Ansprüche 1 bis 4, **dadurch gekennzeichnet,** daß die wulst- und/oder rippenförmigen Abschnitte(8,9, 10;40,41,42;42,48,49;61,62;72,73,74,75)untereinander verbunden sind.

6. Kasten nach einem der vorhergehenden Ansprüche, **dadurch gekennzeichnet,** daß wenigstens der obere und der untere wulstförmige Abschnitt(8,10;42,49;51,52;72,73) durch voneinander getrennte Gaseinblasung mit einem Hohlraum versehen sind, die keine Verbindung miteinander aufweisen.

7. Kasten nach einem der vorhergehenden Ansprüche, **dadurch gekennzeichnet,** daß im Handgriffbereich Fließbremsen(13,14,15,23,47) für die Kunststoffströme vorgesehen sind, die einerseits die Fließgeschwindigkeit des Kunststoffes reduzieren und andererseits ein Durchbrechen des Gases verhindern.

8. Kasten nach einem der vorhergehenden Ansprüche, **dadurch gekennzeichnet,** daß der untere wulstförmige Abschnitt(72) des Handgriffs(70) bogenförmig verläuft und der Handgriff an seiner Unterseite damit eine konvexe Form aufweist.

9. Kasten, insbesondere Flaschenkasten, der aus Kunststoff im Spritzverfahren hergestellt ist, mit einem Handgriff, der aus wenigstens zwei übereinander angeordneten wulstförmigen Abschnitten besteht, insbesondere nach einem der vorhergehenden Ansprüche, **dadurch gekennzeichnet,** daß wenigstens die untere Außenseite des unteren wulstförmigen Abschnitts(61) aus einem weicheren Kunststoffmaterial (Lage 63) hergestellt ist.

10. Kasten nach Anspruch 9, **dadurch gekennzeichnet,** daß das weichere Kunststoffmaterial (Lage 63) ebenfalls im Spritzverfahren in die Form eingebracht und an der Innenseite mit dem eigentlichen Kunststoffmaterial zum Herstellen des übrigen Kastens abgedeckt ist.

11. Kasten nach Anspruch 9, **dadurch gekennzeichnet,** daß das weichere Kunststoffmaterial als separates Bauteil (Lage 63) hergestellt und vor dem Spritzen des übrigen Kastens in die Spritzform eingelegt ist.

12. Kasten nach Anspruch 9, **dadurch gekennzeichnet,** daß das weichere Kunststoffmaterial als separates Bauteil (Lage 63) hergestellt und nachträglich am Handgriff(60) angebracht ist.

13. Kasten nach Anspruch 10, 11 oder 12, **dadurch gekennzeichnet,** daß die untere Außenseite (Lage 63) des Handgriffs(60) und der übrige Kasten aus einem artverwandten Kunststoff hergestellt sind.

14. Kasten nach Anspruch 10, 11, 12 oder 13, **dadurch gekennzeichnet,** daß sowohl die untere Außenseite (Lage 63) des Handgriffs(60) als auch der übrige Kasten aus Polyäthylen, allerdings mit unterschiedlicher Härte, hergestellt sind

15. Verfahren zum Herstellen eines Kastens aus Kunststoff, insbesondere eines Flaschenkastens, der mit wenigstens einem Handgriff(7,38,50,60,70) versehen ist und einen Kastenboden(2) aufweist, nach einem der vorhergehenden Ansprüche, wobei das Einspritzen des flüssigen Kunststoffes in eine Spritzform vom Kastenboden(2) her erfolgt, wobei der Kunststoff vom Kastenboden her in den Bereich des Handgriffs gelangt und diesen von zwei gegenüberliegenden Enden des Handgriffs gleichzeitig anströmt, wobei die übereinander liegenden wulst- und/oder rippenförmigen Abschnitte mit unterschiedlicher Strömungsgeschwindigkeit angeströmt werden und in die Kanäle zur Bildung der wulst- und/oder rippenförmigen Abschnitte (8,9,10;40,41,42;42,48,49;51,52;61,62;72,73,74,75) im noch flüssigen Zustand des Kunststoffs Gas eingepreßt wird, wobei der Gasdruck bis zum wenigstens teilweisen Abkühlen des Kunststoffs aufrechterhalten wird, **dadurch gekennzeichnet**, daß im Bereich des Handgriffs(60) zwei unterschiedliche Kunststoffe eingespritzt werden, wobei sich der nach dem Erhärten weichere Kunststoff an die untere Außenseite des Handgriffs anlegt und der andere Kunststoff die übrige Spritzform ausfüllt.

## Claims

1. Crate (1), for bottles in particular, that is manufactured from plastic by the injection-moulding process, with a base (2) and at least one handle (7, 38, 50, 60, 70) for carrying the crate (1), this handle (7, 38, 50, 60, 70) being provided at least at the top and at the bottom with a bead-shaped section (8, 10; 40, 42; 49; 51, 52; 61, 62; 72, 73) that extends in the longitudinal direction of the handle, at least one of which is made to be hollow along at least part of its horizontal length by the injection of gas, **wherein** the bead-shaped section (51) located on the lower edge of the handle (50) is wave-shaped both on its lower edge and its free upper edge, with the waves extending at right angles to the longitudinal direction of the handle and being shaped to correspond to the fingers of the human hand.

2. Crate according to claim 1, **wherein** the bead-shaped section (52) provided on the upper edge of the handle (50) is wave-shaped on its free lower edge.

3. Crate according to claim 1 or 2, **wherein** the cross-section of at least the bead-shaped section (10, 42, 51, 61, 71) located on the lower edge of the handle (7, 38, 50, 60, 70) is at least approximately drop-shaped.

4. Crate according to claim 1, 2 or 3, **wherein** at least one further rib-shaped section (9, 41, 48, 74, 75) is provided between the two bead-shaped sections (8, 10; 40, 42; 42, 49; 71, 72).

5. Crate according to one of claims 1 to 4, **wherein** the bead- and/or rib-shaped sections (8, 9, 10; 40, 41, 42; 42, 48, 49; 61, 62; 72, 73, 74, 75) are connected to each other.

6. Crate according to one of the previous claims, **wherein** at least the upper and lower bead-shaped sections (8, 10; 42, 49; 51, 52; 72, 73) are provided with a hollow cavity by separate gas injection operations so that the cavities are not connected in any way.

7. Crate according to one of the previous claims, **wherein** flow brakes (13, 14, 15, 23, 47) are provided for the flows of plastic in the handle area, which on the one hand reduce the flow speed of the plastic and on the other hand prevent gas penetration.

8. Crate according to one of the previous claims, **wherein** the lower bead-shaped section (72) of the handle (70) extends in a curve and the handle therefore has a convex shape on its lower edge.

9. Crate, for bottles in particular, that is manufactured from plastic by the injection-moulding process, with a handle that consists of at least two bead-shaped sections located above each other, particularly according to one of the previous claims, **wherein** at least the lower outer edge of the lower bead-shaped section (61) is produced from a softer plastic material (layer 63).

10. Crate according to claim 9, **wherein** the softer plastic material (layer 63) is also fed into the mould by the injection-moulding process and is covered on the inside by the plastic material used to produce the rest of the crate.

11. Crate according to claim 9, **wherein** the softer plastic material is produced as a separate component (layer 63) and is loaded in the injection mould before the rest of the crate is injection-moulded.

12. Crate according to claim 9, **wherein** the softer plastic material is produced as a separate component (layer 63) and is attached to the handle (60) subsequently.

13. Crate according to claim 10, 11 or 12, **wherein** the lower outer edge (layer 63) of the handle (60) and the rest of the crate are produced from a related plastic.

14. Crate according to claim 10, 11, 12 or 13, **wherein** not only the lower outer edge (layer 63) of the handle (60) but also the rest of the crate are produced from polyethylene, albeit of different hardness.

15. Process for the production of a crate - for bottles in particular - from plastic, that is provided with at least one handle (7, 38, 50, 60, 70) and has a base (2), according to one of the previous claims, the liquid plastic being injected into an injection mould from the base (2) of the crate, the plastic moving into the area of the handle from the base of the crate and flowing into the handle simultaneously from two opposite ends of the handle, with the bead- and/or rib-shaped sections located above each other being flowed into at different flow speeds and with gas being forced into the channels for formation of the bead- and/or rib-shaped sections (8, 9, 10; 40, 41, 42; 42, 48, 49; 51, 52; 61, 62; 72, 73, 74, 75) while the plastic is still liquid and with the gas pressure being maintained until the plastic has cooled off at least to some extent, **wherein** two different plastics are injected into the area of the handle (60), the plastic that is softer after the end of the solidification process being positioned on the lower outer edge of the handle, while the other plastic fills out the rest of the injection mould.

## Revendications

1. Casier (1), en particulier casier à bouteilles, en plastique et fabriqué selon un procédé par injection, avec un fond de casier (2) et au moins une poignée de préhension (7, 38, 50, 60, 70) pour porter le casier (1), la poignée de préhension (7, 38, 50, 60, 70) étant pourvue au moins dans la partie supérieure et inférieure d'un segment en forme de bourrelet (8, 10 ; 40, 42 ; 49 ; 51, 52 ; 61, 62 ; 72, 73) s'étendant dans le sens longitudinal de la poignée de préhension, parmi lesquels segments au moins un, au moins sur une partie de son étendue longitudinale, est conçu de façon creuse par insufflation de gaz, caractérisé en ce que le segment en forme de bourrelet (51) disposé sur le bord inférieur de la poignée de préhension (50) est conçu de façon ondulée tant sur sa face inférieure que sur sa face supérieure libre, les ondulations s'étendant transversalement au sens longitudinal de la poignée de préhension et étant conçues de façon adaptée aux doigts de la main d'une personne.

2. Casier selon la revendication 1, caractérisé en ce que le segment en forme de bourrelet (52) prévu sur le bord supérieur de la poignée de préhension (50) est conçu de façon ondulée sur sa face inférieure libre.

3. Casier selon la revendication 1 ou 2, caractérisé en ce qu'au moins le segment en forme de bourrelet (10, 42, 51, 61, 71) disposé sur la face inférieure de la poignée de préhension (7, 38, 50, 60, 70) est conçu en section transversale au moins approximativement en forme de goutte.

4. Casier selon la revendication 1, 2 ou 3, caractérisé en ce qu'il est prévu au moins un autre segment en forme de rainure (9, 41, 48, 74, 75) entre les deux segments en forme de bourrelets (8, 10 ; 40, 42 ; 42, 49 ; 71, 72).

5. Casier selon l'une des revendications 1 à 4, caractérisé en ce que les segments en forme de bourrelets et/ou de rainures (8, 9, 10 ; 40, 41, 42 ; 42, 48, 49 ; 61, 62 ; 72, 73, 74, 75) sont reliés entre eux.

6. Casier selon l'une des revendications précédentes, caractérisé en ce qu'au moins les segments en forme de bourrelets supérieurs et inférieurs (8, 10 ; 42, 49 ; 51, 52 ; 72, 73) sont pourvus d'un espace creux par insufflation de gaz séparée, qui ne présente pas de raccordement avec les autres.

7. Casier selon l'une des revendications précédentes, caractérisé en ce que des freins d'écoulement (13, 14, 15, 23, 47) pour les flux de plastique sont prévus dans la zone de la poignée de préhension, qui, d'une part, réduisent la vitesse d'écoulement du plastique, et, d'autre part, empêchent que le gaz ne traverse.

8. Casier selon l'une des revendications précédentes, caractérisé en ce que le segment en forme de bourrelet inférieur (72) de la poignée de préhension (70) s'étend de façon cintrée et en ce que la poignée de préhension présente de ce fait sur sa face inférieure une forme convexe.

9. Casier, en particulier casier à bouteilles, en plastique et fabriqué selon un procédé par injection, avec une poignée de préhension qui se compose d'au moins deux segments en forme de bourrelets placés l'un au-dessus de l'autre, en particulier selon l'une des revendications précédentes, caractérisé en ce qu'au moins le côté extérieur inférieur du segment en forme de bourrelet inférieur (61) est fabriqué dans un matériau plastique plus mou (couche 63).

10. Casier selon la revendication 9, caractérisé en ce que le matériau plastique plus mou (couche 63) est également introduit dans le moule par le procédé par injection et en ce qu'il est recouvert du côté intérieur avec le matériau plastique proprement dit pour fabriquer le restant du casier.

11. Casier selon la revendication 9, caractérisé en ce que le matériau plastique plus mou est fabriqué en tant que composant séparé (couche 63) et en ce qu'il est placé dans le moule pour injection avant injection du restant du casier.

12. Casier selon la revendication 9, caractérisé en ce que le matériau plastique plus mou est fabriqué en tant que composant séparé (couche 63) et en ce qu'il est appliqué sur la poignée de préhension (60) après coup.

13. Casier selon la revendication 10, 11 ou 12, caractérisé en ce que le côté extérieur inférieur (couche 63) de la poignée de préhension (60) et le reste du casier sont fabriqués dans un plastique apparenté.

14. Casier selon la revendication 10, 11, 12 ou 13, caractérisé en ce que tant le côté extérieur inférieur (couche 63) de la poignée de préhension (60), que le reste du casier sont fabriqués en polyéthylène, mais de dureté différente.

15. Procédé de fabrication d'un casier de plastique, en particulier un casier à bouteilles, pourvu d'au moins une poignée de préhension (7, 38, 50, 60, 70) et comportant un fond de casier (2), selon l'une des revendications précédentes, l'injection du plastique fluide dans un moule pour injection étant réalisée à partir du fond de casier (2), le plastique passant du fond du casier dans la zone de la poignée de préhension et affluant dans celle-ci simultanément des deux côtés opposés de la poignée de préhension, les segments en forme de bourrelets et/ou de rainures placés les uns au-dessus des autres étant ce faisant envahis selon une vitesse d'écoulement différente, et le plastique étant injecté par gaz dans les canaux pour former les segments en forme de bourrelets et/ou de rainures (8, 9, 10 ; 40, 41, 42 ; 42, 48, 49 ; 51, 52 ; 61, 62 ; 72, 73, 74, 75) à l'état encore fluide, la pression du gaz étant maintenue jusqu'à refroidissement au moins partiel du plastique, caractérisé en ce que deux plastiques différents sont injectés dans la zone de la poignée de préhension (60), le plastique plus mou après durcissement étant appliqué sur le côté extérieur inférieur de la poignée de préhension et l'autre plastique remplissant le restant du moule pour injection.
